(19) Europäisches Patentamt
European Patent Office
Office européen des brevets

(11) **EP 4 672 220 A1**

(12) **EUROPEAN PATENT APPLICATION**

(43) Date of publication:
**31.12.2025 Bulletin 2026/01**

(21) Application number: **25168698.6**

(22) Date of filing: **04.04.2025**

(51) International Patent Classification (IPC):
**G09G 5/00** *(2006.01)* **G06F 3/14** *(2006.01)*

(52) Cooperative Patent Classification (CPC):
**G09G 5/006; G06F 1/04; G06F 1/10; G06F 3/14;**
G09G 3/2092; G09G 3/2096; G09G 2330/021;
G09G 2340/0435; G09G 2370/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **25.06.2024 US 202418753839**

(71) Applicant: **INTEL Corporation**
**Santa Clara, CA 95054 (US)**

(72) Inventors:
• **SAMEER KALATHIL, Perazhi**
**Folsom, 95630 (US)**

• **ANSARI, Nausheen**
**Folsom, 95630 (US)**
• **TOMAR, Arvind**
**Folsom, 95630 (US)**
• **RUNYAN, Arthur**
**Folsom, 95630 (US)**
• **NIDAMANURI, Krishna**
**560037 Bangalore (IN)**
• **MAHAJAN, Bharatkumar**
**560035 Bangalore (IN)**

(74) Representative: **HGF**
**HGF Limited**
**4th Floor, 1 City Square**
**Leeds LS1 2AL (GB)**

(54) **METHODS, SYSTEMS, ARTICLES OF MANUFACTURE AND APPARATUS TO REDUCE DYNAMIC REFRESH RATE POWER CONSUMPTION**

(57) Systems, apparatus, articles of manufacture, and methods are disclosed to reduce dynamic refresh rate power consumption. An example apparatus includes interface circuitry, machine-readable instructions, and at least one processor circuit to be programmed by the machine-readable instructions to modify a value of a source clock based on a detected application type, generate a pixel clock value change request based on the application type, cause transmission of the pixel clock value change request to a display, and cause transmission of pixels to the display at the modified source clock value.

FIG. 1

**Description**

BACKGROUND

Computing devices can be coupled to displays. The displays enable viewing of e.g. web page browsing, productivity task(s), graphical user interface (GUI) interaction tasks, and/or gaming applications.

BRIEF DESCRIPTION OF THE DRAWINGS

FIG. 1 is a block diagram of an example environment in which example display controller circuitry and example panel controller circuitry operate to reduce dynamic refresh rate power consumption.
FIG. 2 is a block diagram of an example implementation of the display controller circuitry of FIG. 1.
FIG. 3 is a block diagram of an example implementation of the panel controller circuitry of FIG. 1.
FIGS. 4 and 5 are flowcharts representative of example machine readable instructions and/or example operations that may be executed, instantiated, and/or performed by example programmable circuitry to implement the example display controller circuitry and the example panel controller circuitry of FIGS. 2 and 3.
FIG. 6 is a block diagram of an example processing platform including programmable circuitry structured to execute, instantiate, and/or perform the example machine readable instructions and/or perform the example operations of FIGS. 4 and 5 to implement the example display controller circuitry and the example panel controller circuitry of FIGS. 2 and 3.
FIG. 7 is a block diagram of an example implementation of the programmable circuitry of FIG. 6.
FIG. 8 is a block diagram of another example implementation of the programmable circuitry of FIG. 6.

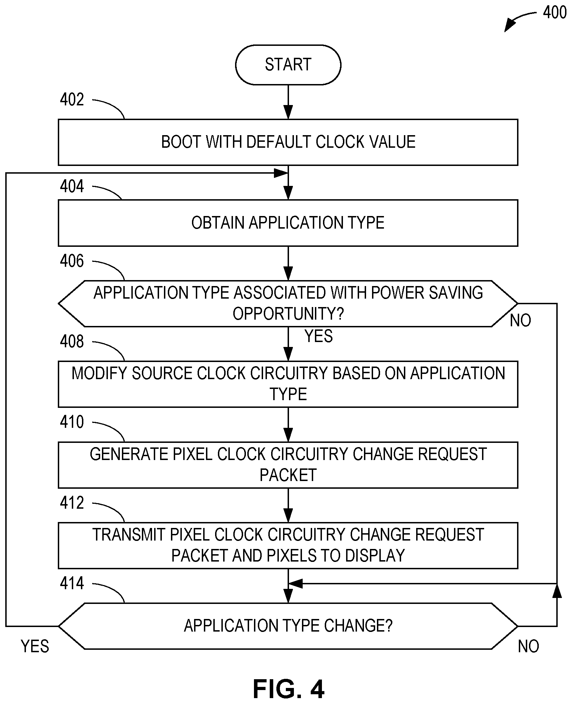

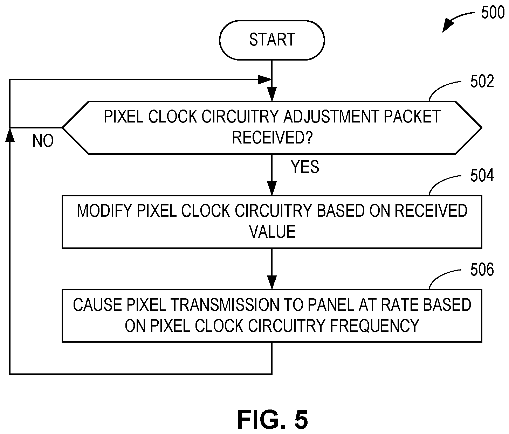

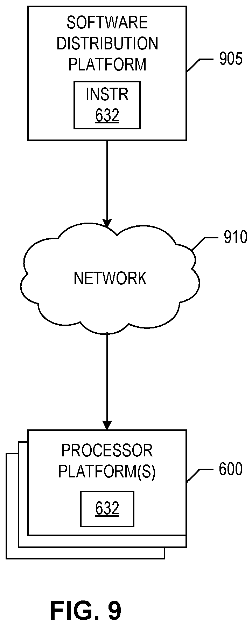

FIG. 9 is a block diagram of an example software/firmware/instructions distribution platform (e.g., one or more servers) to distribute software, instructions, and/or firmware (e.g., corresponding to the example machine readable instructions of FIGS. 4 and 5) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale.

DETAILED DESCRIPTION

Dynamic refresh rates on display panels connected to (e.g., connected via a cable, such as a Universal Serial Bus (USB) cable, a High-Definition Multimedia Interface (HDMI), or wirelessly, etc.) computing devices permit the display panels to match frame rates of pixel information from the computing devices also based on specific applications or application types executed on the computing devices. While a graphics card may have an ability to drive video at a refresh rate higher than a connected display panel, undesirable artifacts may result if such a mismatch in refresh rates occurs. In some cases, a mismatch between a driving frame rate (e.g., from a graphics video card) and a display panel frame rate (e.g., a monitor) results in stuttering effects, lag effects and/or blur.

Known dynamic refresh rate techniques between a source device and a display device require (a) a source clock frequency to operate near its maximum frequency and (b) a display device clock (e.g., a pixel clock) to operate near its maximum frequency. Known and or otherwise traditional variable refresh rate techniques maintain a source clock and a display pixel clock at their highest frequency values and highest voltage levels. As a result, the relatively high clock rates consume a substantial amount of power. Some dynamic refresh rate techniques between a source device and a display device do not drive clocks on the source and display devices at a relatively high rate also when changing refresh rate values, but in such circumstances flash and/or intermediate blank out may occur.

Examples disclosed herein coordinate source device clock values and display device clock values in a manner that reduces power consumption that would otherwise occur when forcing such clocks to operate at or near their maximum values. In particular, examples disclosed herein facilitate power conservation on both a source side and a display side. Examples disclosed herein control refresh rates in a manner that does not result in artifacts, e.g. flash or blank out artifacts.

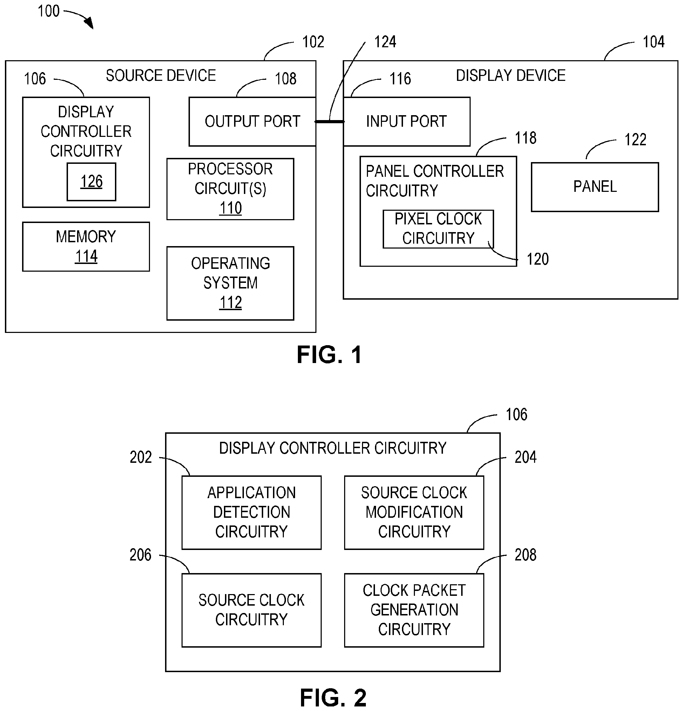

FIG. 1 is a block diagram of an example environment 100 including source devices and display devices constructed in accordance with teachings of this disclosure to reduce dynamic refresh rate power consumption. In the illustrated example of FIG. 1, the environment 100 includes a source device 102 communicatively connected to a display device 104 (sometimes referred to as a video link) via one or more bus lines 124. In some examples, the bus lines 124 are display port cables, audio/video cables (e.g., HDMI), wires, etc. The example source device 102 may be a computing device (e.g., a personal computer, a wireless telephone), a system-on-chip (SoC), etc., in which the source device generates data (e.g., video data such as pixel data, video frames, etc.) to be transmitted over the one or more bus lines 124. The example display device 104 may be a monitor (e.g., an embedded display port (eDP), a variable refresh rate (VRR) device, etc.) that includes a display panel 122 (e.g., a portion of the monitor that illuminates for user viewing, such as a liquid crystal display (LCD) panel, a cathode ray tube (CRT) panel, etc.).

In the illustrated example of FIG. 1, the source device 102 includes example display controller circuitry 106, an example output port 108 communicatively connected to the bus lines 124, example processor circuit(s) 110, an example operating system (OS) 112, and example memory 114. The example display controller circuitry 106 includes example source clock circuitry 126, and in some examples the display controller circuitry 106 includes one or more buffers (e.g., frame buffers). In the illustrated example of FIG. 1, the display device 104 includes an example input port 116 communicatively connected to the bus lines 124, example panel controller circuitry 118 and the example panel 122 (e.g., a light emitting diode (LED) array, a liquid crystal display (LCD), etc.). The example panel controller circuitry 118 includes an example pixel clock 120.

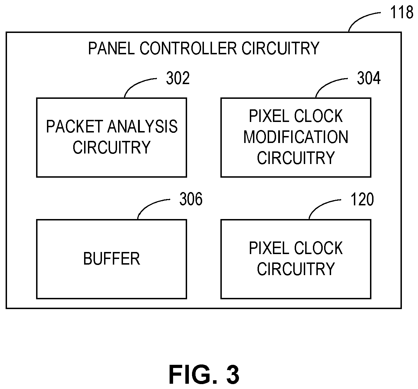

FIG. 2 and FIG. 3 are block diagrams of an example implementation of the display controller circuitry 106 and the panel controller circuitry 118, respectively, of FIG. 1. The display controller circuitry 106 and the panel controller circuitry 118 cooperate to achieve dynamic refresh rate power consumption reduction. The display controller circuitry 106 and the panel controller circuitry 118 of FIGS. 2 and 3 may be instantiated (e.g., creating an instance of, bring into being for any length of time, materialize, implement, etc.) by programmable circuitry such as a Central Processor Unit (CPU) executing first instructions. Additionally or alternatively, the display controller circuitry 106 and the panel controller circuitry 118 of FIGS. 2 and 3 may be instantiated (e.g., creating an instance of, bring into being for any length of time, materialize, implement, etc.) by (i) an Application Specific Integrated Circuit (ASIC), (ii) a graphical processing unit (GPU), and/or (iii) a Field Programmable Gate Array (FPGA) structured and/or configured in response to execution of second instructions to perform operations corresponding to the first instructions. It should be understood that some or all of the circuitry of FIGS. 2 and 3 may, thus, be instantiated at the same or different times. Some or all of the circuitry of FIGS. 2 and 3 may be instantiated, for example, in one or more threads executing concurrently on hardware and/or in series on hardware. Moreover, in some examples, some or all of the circuitry of FIGS. 2 and 3 may be implemented by microprocessor circuitry executing instructions and/or FPGA circuitry performing operations to implement one or more virtual machines and/or containers.

In the illustrated example of FIG. 2, the display controller circuitry 106 includes example application or application type detection circuitry 202, the example source clock circuitry 126, example source clock circuitry 206, and example clock packet generation circuitry 208. As described above, the display controller circuitry 106 may also include one or more buffers. In the illustrated example of FIG. 3, the panel controller circuitry 118 includes example packet analysis circuitry 302, example pixel clock modification circuitry 304, an example buffer 306, and the pixel clock circuitry 120. In some examples the display device 104 and/or the panel controller circuitry 118 includes panel self refresh (PSR) capabilities, which is sometimes referred to as a frame buffer (e.g., refreshing a frame captured in a local frame buffer inside a display panel). In some examples, computing devices come with an attached panel, sometimes referred to as an embedded display (eDP) having interface circuitry and control circuitry (e.g., timing controller(s) (TCON)). Image data received from a source may be sent directly to the example panel 122 or stored in a local frame buffer (e.g., the example buffer 306), such as a PSR to permit processing and display of frames at different frame rates. Generally speaking, examples disclosed herein may include embedded displays and/or external displays (e.g., a monitor having a panel 122 driven by panel controller circuitry 118).

In some examples, the application or application type detection circuitry 202 is instantiated by programmable circuitry executing application or application type detections instructions and/or configured to perform operations such as those represented by the flowchart(s) of FIG. 4. In some examples, the source clock modification circuitry 204 is instantiated by programmable circuitry executing source clock modification instructions and/or configured to perform operations such as those represented by the flowchart(s) of FIG. 4. In some examples, the source clock circuitry 126 is instantiated by programmable circuitry executing source clock instructions and/or configured to perform operations such as those represented by the flowchart(s) of FIG. 4. In some examples, the clock packet generation circuitry 208 is instantiated by programmable circuitry executing clock packet generation instructions and/or configured to perform operations such as those represented by the flowchart(s) of FIG. 4. In some examples, the packet analysis circuitry 302 is instantiated by programmable circuitry executing packet analysis instructions and/or configured to perform operations such as those represented by the flowchart(s) of FIG. 5. In some examples, the pixel clock modification circuitry 304 is instantiated by programmable circuitry executing pixel clock modification instructions and/or configured to perform operations such as those represented by the flowchart(s) of FIG. 5. In some examples, the pixel clock circuitry 120 is instantiated by programmable circuitry executing pixel clock instructions and/or configured to perform operations such as those represented by the flowchart(s) of FIG. 5.

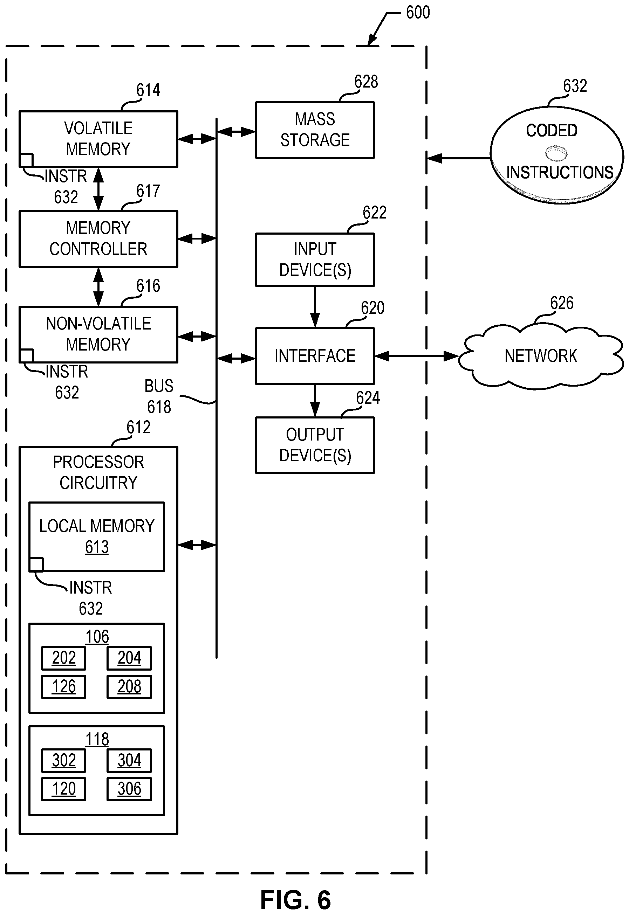

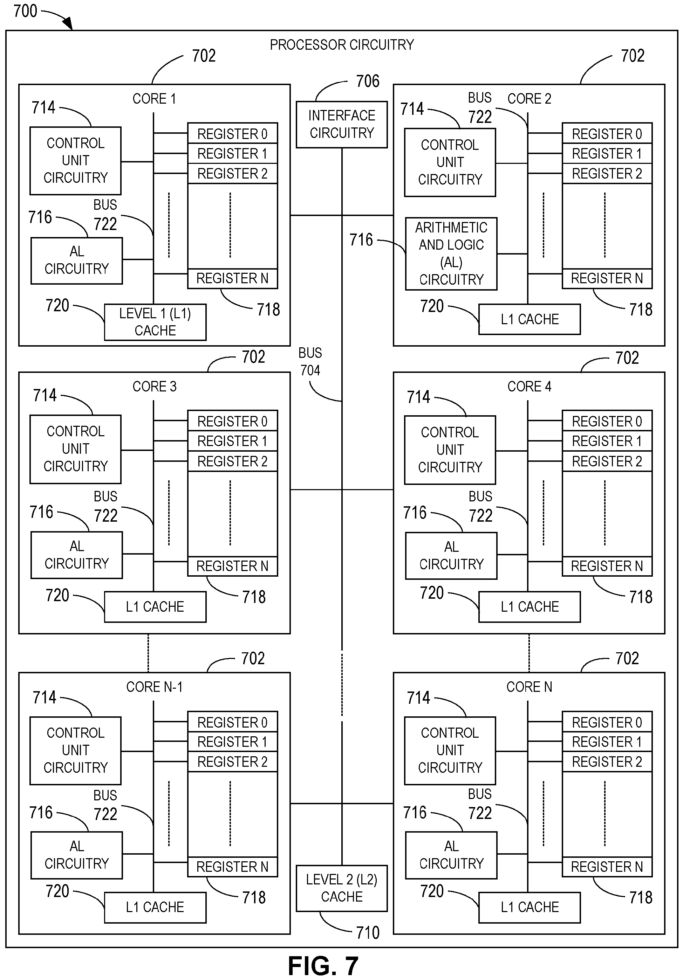

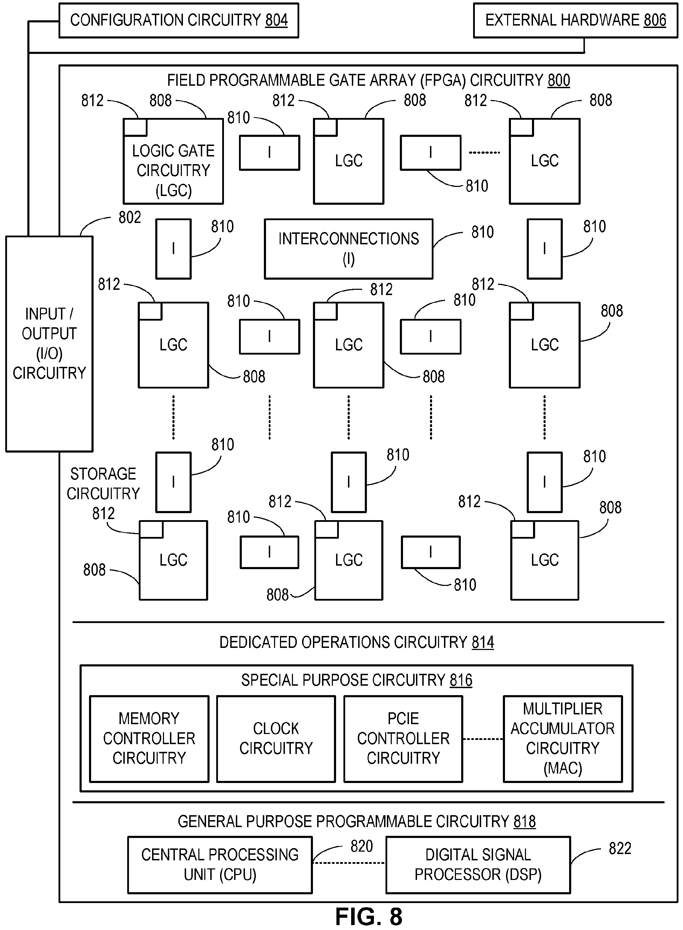

In some examples, the display controller circuitry 106 includes means for detecting applications or application types. In some examples, the display controller circuitry 106 includes means for modifying a source clock. In some examples, the display controller circuitry 106 includes means for clock packet generation. In some examples, the panel controller circuitry 118 includes means for packet analysis. In some examples, the panel controller circuitry 118 includes means for pixel clock modification. For example, the means for detecting applications or application types may be implemented by application or application type detection circuitry 202, the means for modifying a source clock may be implemented by source clock modification circuitry 204, the means for clock packet generation may be implemented by clock packet generations circuitry 208, the means for packet analysis may be implemented by packet analysis circuitry 302, and the means for pixel clock modification may be implemented by pixel clock modification circuitry 304. In some examples, the aforementioned circuitry may be instantiated by programmable circuitry such as the example programmable circuitry 612 of FIG. 6. For instance, the aforementioned circuitry may be instantiated by the example microprocessor 700 of FIG. 7 executing machine executable instructions such as those implemented by at least blocks 402 through 414 of FIG. 4, and blocks 502 through 506 of FIG. 5. In some examples, the aforementioned circuitry may be instantiated by hardware logic circuitry, which may be implemented by an ASIC, XPU, or the FPGA circuitry 800 of FIG. 8 configured and/or structured to perform operations corresponding to the machine readable instructions. Additionally or alternatively, the aforementioned circuitry may be instantiated by any other combination of hardware, software, and/or firmware. For example, the aforementioned circuitry may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In operation, the example source device 102 and the example display device 104 of the example environment 100 receive power and one or more boot processes begins. During such boot processes, the example source clock circuitry 126 of the example display controller circuitry 106 and the example pixel clock circuitry 120 of the example panel controller circuitry 118 begin operation at a default clock frequency. In particular, legacy environments set the default clock frequencies at a maximum value to accommodate for an unknown refresh rate demand for a future application or application type. Clock rates associated with the display controller circuitry 106 (e.g., the source clock circuitry 126) and the panel controller circuitry 118 (e.g., the pixel clock circuitry 120) change the rate at which fetch and scan out of data (e.g., pixels) is done from a source (e.g., from a memory or buffer) to a display. In user scenarios such as idle time, productivity applications, browsing applications, media playback applications, and/or user interactive scenario applications the rate of fetch and scan out of pixels varies. As such, maintaining relatively high clock frequency values for relatively less demanding applications results in wasted power consumption. In non-gaming scenarios, examples disclosed herein enable refresh rate changes based on applications or application types, such as media playback at a 24 frames per second (fps) rate. As such, a corresponding display frame rate can run at 24 fps without adverse visual artifacts (e.g., stuttering, blurring, etc.). Typical display devices can run at 120Hz, 240Hz, 360Hz and higher. Similarly, typical display devices can run as low as 5Hz, particularly when productivity applications or application types are executing.

During boot of a source/display environment 100 there is insufficient information to know whether video demands are associated with productivity applications (e.g., applications that do not exhibit a substantial amount of dynamic video), gaming applications (e.g., applications that exhibit a relatively substantial amount of dynamic and/or otherwise fast-paced video), or media applications having a particular frame rate. As such, a maximum default clock rate is set at boot to accommodate for a most demanding scenario.

As described above, to enable a reduction in power consumption in the source device 102 and/or the display device 104, the example application or application type detection circuitry 202 obtains information corresponding to an application or application type generated and/or to be generated by the source device 102. In some examples, the application or application type detection circuitry 202 retrieves, receives and/or otherwise obtains application type information from the OS 112 and/or one or more registers of the processor circuit(s) 110.

The application or application type detection circuitry 202 determines whether the detected application or application type corresponds to an opportunity to save power for one or more devices within the environment 100. For instance, if the devices within the environment 100 have recently powered-up from a cold-boot, then the example source clock circuitry 126 of the source device 102 and the example pixel clock circuitry 120 of the display device 104 may be operating at their respective maximum frequencies. In this example circumstance, if the application or application type detection circuitry 202 determines that the detected application or application type corresponds to a gaming application, then there is no opportunity for power savings because gaming application typically require relatively elevated performance settings on the underlying computational resources and/or display devices. On the other hand, in the event the application or application type detection circuitry 202 detects an application or application type having a relatively less demanding expectation for video processing (e.g., a media application with a relatively low frame rate, a productivity application, such as word processing, spreadsheets or web-browsing, etc.), then clock speeds may be reduced to save power.

In some examples, the application or application type detection circuitry 202 compares a detected application or application type against an application or application type list that is ranked e.g. by type. For instance, the rank may include categories of "low," "medium," and "high." In some examples, the rank categories may be numeric, such as a value between 1 and 10, where 1 represents a relatively low demand application or application type (e.g., a word processing application) and 10 represents a relatively high demand application or application type (e.g., a gaming application). The example source clock modification circuitry 204 retrieves, receives and/or otherwise obtains the application or application type from the application detection circuitry 202 to determine a manner by which to modify the source clock circuitry 126. For example, if the application or application type corresponds to a word processing application and/or a relatively low rank value between 1 and 3, then the source clock modification circuitry 204 causes the source clock circuitry 126 to reduce its operating frequency to a particular value that is lower than the default value (e.g., lower than the relatively highest clock frequency). In some examples, each rank value (e.g., values between 1 and 10) corresponds to a particular clock frequency value stored in a lookup table (e.g., a lookup table stored in the example memory 114).

As described above, while a source-side clock may be modified to conserve power associated with source-side components, mismatches between a sending refresh rate and a receiving refresh rate associated with the display device 104 may cause undesirable visual artifacts (e.g., skipping, blur, stuttering, etc.). Additionally, in the event the source-side frame rate is associated with a relatively low demand application or application type, then a continued maximum and/or otherwise relatively high clock speed on the display-side results in wasted energy on the display-side. To synchronize the display-side pixel clock frequency based on source-side application or application type demands, the clock packet generation circuitry 208 generates a pixel clock change request packet. In some examples, the pixel clock change request packet is generated in a manner consistent with one or more communication standards and/or protocols to be transmitted over the example bus lines 124. In some examples, the pixel clock change request packet is compliant with Display Port Configuration Data protocols, in which one or more registers can be read and/or written to with target pixel clock rate values. The example display controller circuitry 106 sends the pixel clock change request packet to the example packet analysis circuitry 302 to cause pixel clock frequency changes in the panel controller circuitry 118.

The packet analysis circuitry 302 of the panel controller circuitry 118 monitors for device status queries and/or pixel clock change request packets. When received, the example pixel clock modification circuitry 304 modifies an operating frequency of the pixel clock circuitry 120 based on the target value sent by the display controller circuitry 106. When the pixel clock circuitry 120 is operating at the target frequency, the panel controller circuitry 118 permits a pixel transmission at a refresh rate corresponding to the newly established pixel clock circuitry 120 frequency.

In one example scenario, a display device 104 supports a refresh rate (RR) between 24Hz and 120Hz. In this example scenario, a refresh rate of 120Hz corresponds to pixel clock circuitry 120 frequency of 710.4Mhz (e.g., at a Quad-High-Definition (QHD) of 120Hz). On system boot, the example display controller circuitry 106 of the source device 102 is configured by default to operate at a refresh rate of 120Hz. In this example scenario, a refresh rate of the display controller circuitry 106 at 120Hz corresponds to a source clock circuitry 126 frequency of 480MHz. Additionally, each particular frequency rate of the source clock circuitry 126 corresponds to a particular voltage level and/or power consumption value (e.g., relatively higher source clock circuitry 126 frequencies cause a relatively higher operating voltage setting, and vice-versa). As such, at an initial state, both the source clock circuitry 126 and the pixel clock circuitry 120 are operating at relatively high frequencies based on target RR values of 120Hz.

However, if any desktop productivity application is used, which is detected by the example application or application type detection circuitry 202, the RR corresponding to the source device 102 is changed from 120Hz to 60Hz, and a RR ratio is determined by the source clock modification circuitry 204 in a manner consistent with example Equation 1.

$$RR\ ratio = \frac{requested\ RR}{current\ RR}$$

Equation 1.

In the illustrated example of Equation 1, and in view of the example productivity scenario, the *requested RR* is 60Hz and the *current RR* is 120Hz, resulting in a *RR ratio* of ½.

While the source clock modification circuitry 204 reduces the frequency of the source clock circuitry 126 (e.g., a reduction from an original frequency of 480MHz to 174MHz), the RR ratio is used by the source clock modification circuitry 204 to calculate a corresponding operating frequency for the pixel clock circuitry 120 of the display device 104. In particular, the source clock modification circuitry 204 calculates and/or otherwise determines a target pixel clock circuitry 120 frequency in a manner consistent with example Equation 2.

$$Pixel\ Clock\ Freq. = (Current\_Pixel\_Freq. * RR\ ratio)$$

Equation 2.

In the example of Equation 2, the *Current_Pixel_Freq* corresponds to the currently operating frequency of the pixel clock circuitry 120, which in this example scenario is 710.4MHz (e.g., the cold-boot maximum frequency). As such, an updated value to be applied to the pixel clock circuitry 120 is 355.2MHz based on the previously calculated *RR ratio* of ½ (see Equation 1). As such, based on the detection of a productivity application, clocks associated with both the source device 102 and the display device 104 are reduced, thereby allowing such devices to be driven at relatively lower voltage values, which further corresponds to lower power consumption values.

As described above, after a target frequency is determined for the pixel clock circuitry 120, the packet analysis circuitry 302 of the panel controller circuitry 118 receives a packet containing this new target frequency to be applied. In some examples, the target frequency value for the pixel clock circuitry 120 is sent in a same packet as pixels and/or frame data to be displayed on the panel 122. In such circumstances, the display device 104 may not be immediately ready to render such pixel and/or frame data on the panel 122 because the new frequency value of the pixel clock circuitry 120 has taken effect. As such, in some examples pixels (and/or frames) are stored in the buffer 306 until the new frequency value of the pixel clock circuitry 120 is in effect. In some examples, the packet analysis circuitry 302 stores incoming pixels and/or frames in the buffer 306 at a rate corresponding to the frequency value of the pixel clock circuitry 120. Stated differently, the pixels and/or frames are stored in the buffer 306 at a first time based on a first frequency or refresh rate, and stored in the buffer 306 at a second time based on an updated and/or otherwise modified frequency or refresh rate.

While an example manner of implementing the example display controller circuitry 106 and the example panel controller circuitry 118 of FIG. 1 is illustrated in FIGS. 2 and 3, one or more of the elements, processes, and/or devices illustrated in FIGS. 2 and 3 may be combined, divided, re-arranged, omitted, eliminated, and/or implemented in any other way. Further, the example application or application type detection circuitry 202, the example source clock modification circuitry 204, the example source clock circuitry 126, the example clock packet generation circuitry 208, the example packet analysis circuitry 302, the example pixel clock modification circuitry 304, the example pixel clock circuitry 120, and/or, more generally, the example display controller circuitry 106 and the example panel controller circuitry 118 of FIGS. 2 and 3, may be implemented by hardware alone or by hardware in combination with software and/or firmware. Thus, for example, any of the example application or application type detection circuitry 202, the example source clock modification circuitry 204, the example source clock circuitry 126, the example clock packet generation circuitry 208, the example packet analysis circuitry 302, the example pixel clock modification circuitry 304, the example pixel clock circuitry 120, and/or, more generally, the example display controller circuitry 106 and the example panel controller circuitry 118 of FIGS. 2 and 3, could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example display controller circuitry 106 and the example panel controller circuitry 118 of FIGS. 2 and 3 may include one or more elements, processes, and/or devices in addition to, or instead of, those illustrated in FIGS. 2 and 3, and/or may include more than one of any or all of the illustrated elements, processes and devices.

Flowchart(s) representative of example machine readable instructions, which may be executed by programmable circuitry to implement and/or instantiate the example display controller circuitry 106 and the example panel controller circuitry 118 of FIGS. 2 and 3 and/or representative of example operations which may be performed by programmable circuitry to implement and/or instantiate the display controller circuitry 106 and the example panel controller circuitry 118 of FIGS. 2 and 3, are shown in FIGS. 4 and 5. The machine readable instructions may be one or more executable programs or portion(s) of one or more executable programs for execution by programmable circuitry such as the programmable circuitry 612 shown in the example processor platform 600 discussed below in connection with FIG. 6 and/or may be one or more function(s) or portion(s) of functions to be performed by the example programmable circuitry (e.g., an FPGA) discussed below in connection with FIGS. 7 and/or 8. In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIGS. 4 and 5, many other methods of implementing the example display controller circuitry 106 and the example panel controller circuitry 118 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 4 and 5 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

FIG. 4 is a flowchart representative of example machine readable instructions and/or example operations 400 that may be executed, instantiated, and/or performed by programmable circuitry to modify source clock circuitry 126 values and transmit pixel clock circuitry 120 change requests. The example machine-readable instructions and/or the example operations 400 of FIG. 4 begin at block 402, at which the source device 102 boots with a default source clock circuitry 126 value. As described above, cold boot typically includes clock frequencies set at their highest operating values in an abundance of caution to be ready for demanding video performance expectations (e.g., gaming applications). The example application or application type detection circuitry 202 obtains an application type (block 404), such as an application type associated with video to be transmitted via the example output port 108 via the bus lines 124. In some examples, the application or application type detection circuitry 202 is communicatively connected to the OS 112 and/or registers of the processor circuit(s) 110 to determine which application is to transmit pixel data to the display device 104. The application or application type detection circuitry 202 determines if the application type is associated with a power savings opportunity (block 406). If not, control advances to block 414 where the application or application type detection circuitry 202 determines if there has been a change in the application type. If not, then the example operations 400 wait for a trigger indicative of an application type change. Circumstances where a power savings opportunity is not present include source clock circuitry 126 already operating at a relatively high and/or maximum frequency combined with a detected gaming application. As such, the maximum frequency of the source clock circuitry 126 would be maintained to accommodate for the gaming application demands.

If the application or application type detection circuitry 202 determines that the application type is associated with a power savings opportunity (block 406), then the source clock modification circuitry 204 modifies the source clock circuitry 126 based on the application type (block 408). For example, if the application type is associated with a productivity application (e.g., a spreadsheet application), then refresh rates for pixel transmission do not need to be high and the source clock circuitry 126 frequency is reduced. Additionally, the clock packet generation circuitry 208 generates a pixel clock circuitry change request packet (block 410) to be used to alter and/or otherwise modify the pixel clock circuitry 120 of the display device 104. The display controller circuitry 106 transmits the pixel clock circuitry change request packet and transmits pixels at the newly established rate to the display device 104 (block 412). The example application or application type detection circuitry 202 determines whether another application type change occurs (block 414) and if so, control returns to block 404.

FIG. 5 is a flowchart representative of example machine readable instructions and/or example operations 500 that may be executed, instantiated, and/or performed by programmable circuitry to modify pixel clock circuitry 120 based on source clock circuitry 126 changes. The example machine-readable instructions and/or the example operations 500 of FIG. 5 begin at block 502, at which the packet analysis circuitry 302 determines whether a pixel clock circuitry packet has been received. If so, then the pixel clock modification circuitry 304 parses the packet to extract target frequency parameters and modifies the pixel clock circuitry 120 based on the target value (block 504). Once the pixel clock circuitry 120 is operating at the target frequency value, the panel controller circuitry 118 causes pixel transmission(s) to the panel at the newly established frequency (block 506). Control then returns to block 502 to await other instances of clock change request(s).

FIG. 6 is a block diagram of an example programmable circuitry platform 600 structured to execute and/or instantiate the example machine-readable instructions and/or the example operations of FIGS. 4 and 5 to implement the display controller circuitry 106 and the example panel controller circuitry 118 of FIGS. 2 and 3. The programmable circuitry platform 600 can be, for example, a server, a personal computer, a workstation, a self-learning machine (e.g., a neural network), a mobile device (e.g., a cell phone, a smart phone, a tablet such as an iPad™), an Internet appliance, a DVD player, a digital video recorder, a Blu-ray player, a gaming console, a personal video recorder, a set top box, a headset (e.g., an augmented reality (AR) headset, a virtual reality (VR) headset, etc.) or other wearable device, a system-on-chip (SoC) or any other type of computing and/or electronic device.

The programmable circuitry platform 600 of the illustrated example includes programmable circuitry 612. The programmable circuitry 612 of the illustrated example is hardware. For example, the programmable circuitry 612 can be implemented by one or more integrated circuits, logic circuits, FPGAs, microprocessors, CPUs, GPUs, DSPs, and/or microcontrollers from any desired family or manufacturer. The programmable circuitry 612 may be implemented by one or more semiconductor based (e.g., silicon based) devices. In this example, the programmable circuitry 612 implements the example application or application type detection circuitry 202, the example source clock modification circuitry 204, the example source clock circuitry 126, the example clock packet generation circuitry 208, the example packet analysis circuitry 302, the example pixel clock modification circuitry 304, the example pixel clock circuitry 120, the example buffer 306, the example display controller circuitry 106, and the example panel controller circuitry 118.

The programmable circuitry 612 of the illustrated example includes a local memory 613 (e.g., a cache, registers, etc.). The programmable circuitry 612 of the illustrated example is in communication with main memory 614, 616, which includes a volatile memory 614 and a non-volatile memory 616, by a bus 618. The volatile memory 614 may be implemented by Synchronous Dynamic Random Access Memory (SDRAM), Dynamic Random Access Memory (DRAM), RAMBUS® Dynamic Random Access Memory (RDRAM®), and/or any other type of RAM device. The non-volatile memory 616 may be implemented by flash memory and/or any other desired type of memory device. Access to the main memory 614, 616 of the illustrated example is controlled by a memory controller 617. In some examples, the memory controller 617 may be implemented by one or more integrated circuits, logic circuits, microcontrollers from any desired family or manufacturer, or any other type of circuitry to manage the flow of data going to and from the main memory 614, 616.

The programmable circuitry platform 600 of the illustrated example also includes interface circuitry 620. The interface circuitry 620 may be implemented by hardware in accordance with any type of interface standard, such as an Ethernet interface, a universal serial bus (USB) interface, a Bluetooth® interface, a near field communication (NFC) interface, a Peripheral Component Interconnect (PCI) interface, and/or a Peripheral Component Interconnect Express (PCIe) interface.

In the illustrated example, one or more input devices 622 are connected to the interface circuitry 620. The input device(s) 622 permit(s) a user (e.g., a human user, a machine user, etc.) to enter data and/or commands into the programmable circuitry 612. The input device(s) 622 can be implemented by, for example, an audio sensor, a microphone, a camera (still or video), a keyboard, a button, a mouse, a touchscreen, a trackpad, a trackball, an isopoint device, and/or a voice recognition system.

One or more output devices 624 are also connected to the interface circuitry 620 of the illustrated example. The output device(s) 624 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 620 of the illustrated example, thus, typically includes a graphics driver card, a graphics driver chip, and/or graphics processor circuitry such as a GPU.

The interface circuitry 620 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 626. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 600 of the illustrated example also includes one or more mass storage discs or devices 628 to store firmware, software, and/or data. Examples of such mass storage discs or devices 628 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 632, which may be implemented by the machine readable instructions of FIGS. 4 and 5, may be stored in the mass storage device 628, in the volatile memory 614, in the non-volatile memory 616, and/or on at least one non-transitory computer readable storage medium such as a CD or DVD which may be removable.

FIG. 7 is a block diagram of an example implementation of the programmable circuitry 612 of FIG. 6. In this example, the programmable circuitry 612 of FIG. 6 is implemented by a microprocessor 700. For example, the microprocessor 700 may be a general-purpose microprocessor (e.g., general-purpose microprocessor circuitry). The microprocessor 700 executes some or all of the machine-readable instructions of the flowcharts of FIGS. 4 and 5 to effectively instantiate the circuitry of FIG. 2 as logic circuits to perform operations corresponding to those machine readable instructions. In some such examples, the circuitry of FIGS. 2 and 3 is instantiated by the hardware circuits of the microprocessor 700 in combination with the machine-readable instructions. For example, the microprocessor 700 may be implemented by multi-core hardware circuitry such as a CPU, a DSP, a GPU, an XPU, etc. Although it may include any number of example cores 702 (e.g., 1 core), the microprocessor 700 of this example is a multi-core semiconductor device including N cores. The cores 702 of the microprocessor 700 may operate independently or may cooperate to execute machine readable instructions. For example, machine code corresponding to a firmware program, an embedded software program, or a software program may be executed by one of the cores 702 or may be executed by multiple ones of the cores 702 at the same or different times. In some examples, the machine code corresponding to the firmware program, the embedded software program, or the software program is split into threads and executed in parallel by two or more of the cores 702. The software program may correspond to a portion or all of the machine readable instructions and/or operations represented by the flowcharts of FIGS. 4 and 5.

The cores 702 may communicate by a first example bus 704. In some examples, the first bus 704 may be implemented by a communication bus to effectuate communication associated with one(s) of the cores 702. For example, the first bus 704 may be implemented by at least one of an Inter-Integrated Circuit (12C) bus, a Serial Peripheral Interface (SPI) bus, a PCI bus, or a PCIe bus. Additionally or alternatively, the first bus 704 may be implemented by any other type of computing or electrical bus. The cores 702 may obtain data, instructions, and/or signals from one or more external devices by example interface circuitry 706. The cores 702 may output data, instructions, and/or signals to the one or more external devices by the interface circuitry 706. Although the cores 702 of this example include example local memory 720 (e.g., Level 1 (L1) cache that may be split into an L1 data cache and an L1 instruction cache), the microprocessor 700 also includes example shared memory 710 that may be shared by the cores (e.g., Level 2 (L2 cache)) for high-speed access to data and/or instructions. Data and/or instructions may be transferred (e.g., shared) by writing to and/or reading from the shared memory 710. The local memory 720 of each of the cores 702 and the shared memory 710 may be part of a hierarchy of storage devices including multiple levels of cache memory and the main memory (e.g., the main memory 614, 616 of FIG. 6). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 702 may be referred to as a CPU, DSP, GPU, etc., or any other type of hardware circuitry. Each core 702 includes control unit circuitry 714, arithmetic and logic (AL) circuitry (sometimes referred to as an ALU) 716, a plurality of registers 718, the local memory 720, and a second example bus 722. Other structures may be present. For example, each core 702 may include vector unit circuitry, single instruction multiple data (SIMD) unit circuitry, load/store unit (LSU) circuitry, branch/jump unit circuitry, floating-point unit (FPU) circuitry, etc. The control unit circuitry 714 includes semiconductor-based circuits structured to control (e.g., coordinate) data movement within the corresponding core 702. The AL circuitry 716 includes semiconductor-based circuits structured to perform one or more mathematic and/or logic operations on the data within the corresponding core 702. The AL circuitry 716 of some examples performs integer based operations. In other examples, the AL circuitry 716 also performs floating-point operations. In yet other examples, the AL circuitry 716 may include first AL circuitry that performs integer-based operations and second AL circuitry that performs floating-point operations. In some examples, the AL circuitry 716 may be referred to as an Arithmetic Logic Unit (ALU).

The registers 718 are semiconductor-based structures to store data and/or instructions such as results of one or more of the operations performed by the AL circuitry 716 of the corresponding core 702. For example, the registers 718 may include vector register(s), SIMD register(s), general-purpose register(s), flag register(s), segment register(s), machine-specific register(s), instruction pointer register(s), control register(s), debug register(s), memory management register(s), machine check register(s), etc. The registers 718 may be arranged in a bank as shown in FIG. 7. Alternatively, the registers 718 may be organized in any other arrangement, format, or structure, such as by being distributed throughout the core 702 to shorten access time. The second bus 722 may be implemented by at least one of an I2C bus, a SPI bus, a PCI bus, or a PCIe bus.

Each core 702 and/or, more generally, the microprocessor 700 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 700 is a semiconductor device fabricated to include many transistors interconnected to implement the structures described above in one or more integrated circuits (ICs) contained in one or more packages.

The microprocessor 700 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 700, in the same chip package as the microprocessor 700 and/or in one or more separate packages from the microprocessor 700.

FIG. 8 is a block diagram of another example implementation of the programmable circuitry 612 of FIG. 6. In this example, the programmable circuitry 612 is implemented by FPGA circuitry 800. For example, the FPGA circuitry 800 may be implemented by an FPGA. The FPGA circuitry 800 can be used, for example, to perform operations that could otherwise be performed by the example microprocessor 700 of FIG. 7 executing corresponding machine readable instructions. However, once configured, the FPGA circuitry 800 instantiates the operations and/or functions corresponding to the machine readable instructions in hardware and, thus, can often execute the operations/functions faster than they could be performed by a general-purpose microprocessor executing the corresponding software.

More specifically, in contrast to the microprocessor 700 of FIG. 7 described above (which is a general purpose device that may be programmed to execute some or all of the machine readable instructions represented by the flowchart(s) of FIGS. 4 and 5 but whose interconnections and logic circuitry are fixed once fabricated), the FPGA circuitry 800 of the example of FIG. 8 includes interconnections and logic circuitry that may be configured, structured, programmed, and/or interconnected in different ways after fabrication to instantiate, for example, some or all of the operations/functions corresponding to the machine readable instructions represented by the flowchart(s) of FIGS. 4 and 5. In particular, the FPGA circuitry 800 may be thought of as an array of logic gates, interconnections, and switches. The switches can be programmed to change how the logic gates are interconnected by the interconnections, effectively forming one or more dedicated logic circuits (unless and until the FPGA circuitry 800 is reprogrammed). The configured logic circuits enable the logic gates to cooperate in different ways to perform different operations on data received by input circuitry. Those operations may correspond to some or all of the instructions (e.g., the software and/or firmware) represented by the flowchart(s) of FIGS. 4 and 5. As such, the FPGA circuitry 800 may be configured and/or structured to effectively instantiate some or all of the operations/functions corresponding to the machine readable instructions of the flowchart(s) of FIGS. 4 and 5 as dedicated logic circuits to perform the operations/functions corresponding to those software instructions in a dedicated manner analogous to an ASIC. Therefore, the FPGA circuitry 800 may perform the operations/functions corresponding to the some or all of the machine readable instructions of FIGS. 4 and 5 faster than the general-purpose microprocessor can execute the same.

In the example of FIG. 8, the FPGA circuitry 800 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 800 of FIG. 8 may access and/or load the binary file to cause the FPGA circuitry 800 of FIG. 8 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 800 of FIG. 8 to cause configuration and/or structuring of the FPGA circuitry 800 of FIG. 8, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 800 of FIG. 8 may access and/or load the binary file to cause the FPGA circuitry 800 of FIG. 8 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 800 of FIG. 8 to cause configuration and/or structuring of the FPGA circuitry 800 of FIG. 8, or portion(s) thereof.

The FPGA circuitry 800 of FIG. 8, includes example input/output (I/O) circuitry 802 to obtain and/or output data to/from example configuration circuitry 804 and/or external hardware 806. For example, the configuration circuitry 804 may be implemented by interface circuitry that may obtain a binary file, which may be implemented by a bit stream, data, and/or machine-readable instructions, to configure the FPGA circuitry 800, or portion(s) thereof. In some such examples, the configuration circuitry 804 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 806 may be implemented by external hardware circuitry. For example, the external hardware 806 may be implemented by the microprocessor 700 of FIG. 7.

The FPGA circuitry 800 also includes an array of example logic gate circuitry 808, a plurality of example configurable interconnections 810, and example storage circuitry 812. The logic gate circuitry 808 and the configurable interconnections 810 are configurable to instantiate one or more operations/functions that may correspond to at least some of the machine readable instructions of FIGS. 4 and 5 and/or other desired operations. The logic gate circuitry 808 shown in FIG. 8 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 808 to enable configuration of the electrical structures and/or the logic gates to form circuits to perform desired operations/functions. The logic gate circuitry 808 may include other electrical structures such as look-up tables (LUTs), registers (e.g., flip-flops or latches), multiplexers, etc.

The configurable interconnections 810 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 808 to program desired logic circuits.

The storage circuitry 812 of the illustrated example is structured to store result(s) of the one or more of the operations performed by corresponding logic gates. The storage circuitry 812 may be implemented by registers or the like.

In the illustrated example, the storage circuitry 812 is distributed amongst the logic gate circuitry 808 to facilitate access and increase execution speed.

The example FPGA circuitry 800 of FIG. 8 also includes example dedicated operations circuitry 814. In this example, the dedicated operations circuitry 814 includes special purpose circuitry 816 that may be invoked to implement commonly used functions to avoid the need to program those functions in the field. Examples of such special purpose circuitry 816 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 800 may also include example general purpose programmable circuitry 818 such as an example CPU 820 and/or an example DSP 822. Other general purpose programmable circuitry 818 may additionally or alternatively be present such as a GPU, an XPU, etc., that can be programmed to perform other operations.

Although FIGS. 7 and 8 illustrate two example implementations of the programmable circuitry 612 of FIG. 6, many other approaches are contemplated. For example, FPGA circuitry may include an on-board CPU, such as one or more of the example CPU 820 of FIG. 7. Therefore, the programmable circuitry 612 of FIG. 6 may additionally be implemented by combining at least the example microprocessor 700 of FIG. 7 and the example FPGA circuitry 800 of FIG. 8. In some such hybrid examples, one or more cores 702 of FIG. 7 may execute a first portion of the machine readable instructions represented by the flowchart(s) of FIGS. 4 and 5 to perform first operation(s)/function(s), the FPGA circuitry 800 of FIG. 8 may be configured and/or structured to perform second operation(s)/function(s) corresponding to a second portion of the machine readable instructions represented by the flowcharts of FIG. 4 and 5, and/or an ASIC may be configured and/or structured to perform third operation(s)/function(s) corresponding to a third portion of the machine readable instructions represented by the flowcharts of FIGS. 4 and 5.

It should be understood that some or all of the circuitry of FIGS. 2 and 3 may, thus, be instantiated at the same or different times. For example, same and/or different portion(s) of the microprocessor 700 of FIG. 7 may be programmed to execute portion(s) of machine-readable instructions at the same and/or different times. In some examples, same and/or different portion(s) of the FPGA circuitry 800 of FIG. 8 may be configured and/or structured to perform operations/functions corresponding to portion(s) of machine-readable instructions at the same and/or different times.

In some examples, some or all of the circuitry of FIGS. 2 and 3 may be instantiated, for example, in one or more threads executing concurrently and/or in series. For example, the microprocessor 700 of FIG. 7 may execute machine readable instructions in one or more threads executing concurrently and/or in series. In some examples, the FPGA circuitry 800 of FIG. 8 may be configured and/or structured to carry out operations/functions concurrently and/or in series. Moreover, in some examples, some or all of the circuitry of FIGS. 2 and 3 may be implemented within one or more virtual machines and/or containers executing on the microprocessor 700 of FIG. 7.

In some examples, the programmable circuitry 612 of FIG. 6 may be in one or more packages. For example, the microprocessor 700 of FIG. 7 and/or the FPGA circuitry 800 of FIG. 8 may be in one or more packages. In some examples, an XPU may be implemented by the programmable circuitry 612 of FIG. 6, which may be in one or more packages. For example, the XPU may include a CPU (e.g., the microprocessor 700 of FIG. 7, the CPU 820 of FIG. 8, etc.) in one package, a DSP (e.g., the DSP 822 of FIG. 8) in another package, a GPU in yet another package, and an FPGA (e.g., the FPGA circuitry 800 of FIG. 8) in still yet another package.

A block diagram illustrating an example software distribution platform 905 to distribute software such as the example machine readable instructions 632 of FIG. 6 to other hardware devices (e.g., hardware devices owned and/or operated by third parties from the owner and/or operator of the software distribution platform) is illustrated in FIG. 9. The example software distribution platform 905 may be implemented by any computer server, data facility, cloud service, etc., capable of storing and transmitting software to other computing devices. The third parties may be customers of the entity owning and/or operating the software distribution platform 905. For example, the entity that owns and/or operates the software distribution platform 905 may be a developer, a seller, and/or a licensor of software such as the example machine readable instructions 632 of FIG. 6. The third parties may be consumers, users, retailers, OEMs, etc., who purchase and/or license the software for use and/or re-sale and/or sub-licensing. In the illustrated example, the software distribution platform 905 includes one or more servers and one or more storage devices. The storage devices store the machine readable instructions 632, which may correspond to the example machine readable instructions of FIGS. 4 and 5, as described above. The one or more servers of the example software distribution platform 905 are in communication with an example network 910, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 632 from the software distribution platform 905. For example, the software, which may correspond to the example machine readable instructions of FIG. 4 and 5, may be downloaded to the example programmable circuitry platform 600, which is to execute the machine readable instructions 632 to implement the display controller circuitry 106 and the example panel controller circuitry 118. In some examples, one or more servers of the software distribution platform 905 periodically offer, transmit, and/or force updates to the software (e.g., the example machine readable instructions 632 of FIG. 6) to ensure improvements, patches, updates, etc., are distributed and applied to the software at the end user devices. Although referred to as software above, the distributed "software" could alternatively be firmware.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified herein.

As used herein "substantially real time" refers to occurrence in a near instantaneous manner recognizing there may be real world delays for computing time, transmission, etc. Thus, unless otherwise specified, "substantially real time" refers to real time +/- 1 second.

As used herein, the phrase "in communication," including variations thereof, encompasses direct communication and/or indirect communication through one or more intermediary components, and does not require direct physical (e.g.,

wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example an integrated circuit may be implemented as one or more of an ASIC, an FPGA, a chip, a microchip, programmable circuitry, a semiconductor substrate coupling multiple circuit elements, a system on chip (SoC), etc.

From the foregoing, it will be appreciated that example systems, apparatus, articles of manufacture, and methods have been disclosed that reduces power consumption of source devices depending on a type of application that is providing video output (e.g., pixels, frames, etc.). In particular, examples disclosed herein avoid driving clocks associated with source devices at their highest operating frequencies at all times. Additionally, examples disclosed herein reduce power consumption of display devices depending on the type of application that is driving the video output at the source devices. Examples disclosed herein coordinate and/or otherwise synchronize clock devices corresponding to both the source device(s) and the display device(s) to conserve power consumption on both the source and display devices, while reducing (e.g., avoiding, eliminating) disruptive visual artifacts of blanking, flashing, stuttering and/or blur when changing clock frequency values (which drive refresh rate values). As such, disclosed systems, apparatus, articles of manufacture, and methods improve the efficiency and experience of using a computing device by reducing power consumption in a manner that is based on a type of application that generates pixel and/or frame output data. Disclosed systems, apparatus, articles of manufacture, and methods are accordingly directed to one or more improvement(s) in the operation of a machine such as a computer or other electronic and/or mechanical device.

Example methods, apparatus, systems, and articles of manufacture to reduce dynamic refresh rate power consumption are disclosed herein. Further examples and combinations thereof include the following:

Example 1 includes an apparatus comprising interface circuitry, machine-readable instructions, and at least one processor circuit to be programmed by the machine-readable instructions to modify a value of a source clock based on a detected application or application type, generate a pixel clock value change request based on the application type, cause transmission of the pixel clock value change request to a display, and cause transmission of pixels to the display at the modified source clock value.

Example 2 includes the apparatus as defined in example 1, wherein one or more of the at least one processor circuit is to monitor an operating system status to detect the application or application type.

Example 3 includes the apparatus as defined in example 1, wherein one or more of the at least one processor circuit is to calculate a refresh rate ratio based on a target refresh rate of the source clock and a current refresh rate of the source clock.

Example 4 includes the apparatus as defined in example 3, wherein one or more of the at least one processor circuit is to calculate a pixel clock value for the pixel clock value change request based on the refresh rate ratio and a current value of a pixel clock associated with the display.

Example 5 includes the apparatus as defined in example 1, wherein one or more of the at least one processor circuit is to reduce the value of the source clock from a default value of the source clock based on the application type corresponding to a productivity application.

Example 6 includes the apparatus as defined in example 1, wherein one or more of the at least one processor circuit is to reduce the value of the source clock from a default value of the source clock based on the application or application type corresponding to a media application.

Example 7 includes the apparatus as defined in example 1, wherein one or more of the at least one processor circuit is to increase the value of the source clock based on the application or application type corresponding to a gaming application.

Example 8 includes At least one non-transitory machine-readable medium comprising machine-readable instructions to cause at least one processor circuit to modify a value of a source clock based on a detected application or application type, generate a pixel clock value change request based on the application or application type, cause transmission of the pixel clock value change request to a display, and cause transmission of pixels to the display at the modified source clock value.

Example 9 includes the at least one non-transitory machine-readable medium as defined in example 8, wherein the machine-readable instructions are to cause one or more of the at least one processor circuit to monitor an operating system status to detect the application or application type.

Example 10 includes the at least one non-transitory machine-readable medium as defined in example 8, wherein the machine-readable instructions are to cause one or more of the at least one processor circuit to calculate a refresh rate ratio based on a target refresh rate of the source clock and a current refresh rate of the source clock.

Example 11 includes the at least one non-transitory machine-readable medium as defined in example 10, wherein the machine-readable instructions are to cause one or more of the at least one processor circuit to calculate a pixel clock value for the pixel clock value change request based on the refresh rate ratio and a current value of a pixel clock associated with the display.

Example 12 includes the at least one non-transitory machine-readable medium as defined in example 8, wherein the machine-readable instructions are to cause one or more of the at least one processor circuit to reduce the value of the source clock from a default value of the source clock based on the application or application type corresponding to a productivity application.

Example 13 includes the at least one non-transitory machine-readable medium as defined in example 8, wherein the machine-readable instructions are to cause one or more of the at least one processor circuit to reduce the value of the source clock from a default value of the source clock based on the application or application type corresponding to a media application.

Example 14 includes the at least one non-transitory machine-readable medium as defined in example 8, wherein the machine-readable instructions are to cause one or more of the at least one processor circuit to increase the value of the source clock based on the application or application type corresponding to a gaming application.

Example 15 includes a method comprising modifying a value of a source clock based on a detected application type, generating a pixel clock value change request based on the application or application type, causing transmission of the pixel clock value change request to a display, and causing transmission of pixels to the display at the modified source clock value.

Example 16 includes the method as defined in example 15, further including monitoring an operating system status to detect the application or application type.

Example 17 includes the method as defined in example 15, further including calculating a refresh rate ratio based on a target refresh rate of the source clock and a current refresh rate of the source clock.

Example 18 includes the method as defined in example 17, further including calculating a pixel clock value for the pixel clock value change request based on the refresh rate ratio and a current value of a pixel clock associated with the display.

Example 19 includes the method as defined in example 15, further including reducing the value of the source clock from a default value of the source clock based on the application or application type corresponding to a productivity application.

Example 20 includes the method as defined in example 15, further including reducing the value of the source clock from a default value of the source clock based on the application or application type corresponding to a media application.

Example 21 includes an apparatus comprising interface circuitry, machine-readable instructions, and at least one processor circuit to be programmed by the machine-readable instructions to parse a first packet to identify a first pixel clock value, modify a value of a pixel clock based on the first pixel clock value, and cause storage of pixels in a buffer at a rate associated with the first pixel clock value.

Example 22 includes the apparatus as defined in example 21, wherein one or more of the at least one processor circuit is to decrease the value of the pixel clock at a first time, and cause access to the pixels in the buffer by a display at a first rate associated with the first pixel clock value.

Example 23 includes the apparatus as defined in example 22, wherein one or more of the at least one processor circuit is to increase the value of the pixel clock at a second time based on a second packet.

Example 24 includes the apparatus as defined in example 23, wherein one or more of the at least one processor circuit is to cause access to the pixels in the buffer by the display at a second rate associated with a second pixel clock value.

Example 25 includes the apparatus as defined in example 24, wherein the first pixel clock value is associated with a productivity application and the second pixel clock value is associated with a gaming application.

Example 26 includes At least one non-transitory machine-readable medium comprising machine-readable instructions to cause at least one processor circuit to parse a first packet to identify a first pixel clock value, modify a value of a pixel clock based on the first pixel clock value, and cause storage of pixels in a buffer at a rate associated with the first pixel clock value.

Example 27 includes the at least one non-transitory machine-readable medium as defined in example 26, wherein the machine-readable instructions are to cause one or more of the at least one processor circuit to decrease the value of the pixel clock at a first time, and cause access to the pixels in the buffer by a display at a first rate associated with the first pixel clock value.

Example 28 includes the at least one non-transitory machine-readable medium as defined in example 26, wherein the machine-readable instructions are to cause one or more of the at least one processor circuit to increase the value of the pixel clock at a second time based on a second packet.

Example 29 includes the at least one non-transitory machine-readable medium as defined in example 28, wherein the machine-readable instructions are to cause one or more of the at least one processor circuit to cause access to the pixels in the buffer by the display at a second rate associated with a second pixel clock value.

Example 30 includes the at least one non-transitory machine-readable medium as defined in example 29, wherein the machine-readable instructions are to cause one or more of the at least one processor circuit to identify the first pixel clock value is associated with a productivity application, and identify the second pixel clock value is associated with a gaming application.

Example 31 includes a method comprising parsing a first packet to identify a first pixel clock value, modifying a value of a pixel clock based on the first pixel clock value, and storing pixels in a buffer at a rate associated with the first pixel clock value.

Example 32 includes the method as defined in example 31, further including decreasing the value of the pixel clock at a first time, and accessing the pixels in the buffer by a display at a first rate associated with the first pixel clock value.

Example 33 includes the method as defined in example 31, further including increasing the value of the pixel clock at a second time based on a second packet.

Example 34 includes the method as defined in example 33, further including accessing to the pixels in the buffer by the display at a second rate associated with a second pixel clock value.

Example 35 includes the method as defined in example 34, wherein the first pixel clock value is associated with a productivity application and the second pixel clock value is associated with a gaming application.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. An apparatus comprising:

   interface circuitry;
   machine-readable instructions; and
   at least one processor circuit to be programmed by the machine-readable instructions to:

   modify a value of a source clock based on a detected application or application type;
   generate a pixel clock value change request based on the application or application type;
   cause transmission of the pixel clock value change request to a display; and
   cause transmission of pixels to the display at the modified source clock value.

2. The apparatus as defined in claim 1, wherein one or more of the at least one processor circuit is to monitor an operating system status to detect the application or application type.

3. The apparatus as defined in any preceding claim, wherein one or more of the at least one processor circuit is to calculate a refresh rate ratio based on a target refresh rate of the source clock and a current refresh rate of the source clock.

4. The apparatus as defined in claim 3, wherein one or more of the at least one processor circuit is to calculate a pixel clock value for the pixel clock value change request based on the refresh rate ratio and a current value of a pixel clock associated with the display.

5. The apparatus as defined in any preceding claim, wherein one or more of the at least one processor circuit is to reduce the value of the source clock from a default value of the source clock based on the application or application type corresponding to a productivity application.

6. The apparatus as defined in any preceding claim, wherein one or more of the at least one processor circuit is to reduce the value of the source clock from a default value of the source clock based on the application or application type corresponding to a media application.

7. The apparatus as defined in any preceding claim, wherein one or more of the at least one processor circuit is to increase the value of the source clock based on the application or application type corresponding to a gaming application.

8. A method comprising:

   modifying a value of a source clock based on a detected application type;
   generating a pixel clock value change request based on the application or application type;
   causing transmission of the pixel clock value change request to a display; and
   causing transmission of pixels to the display at the modified source clock value.

9. The method as defined in claim 8, further including monitoring an operating system status to detect the application or application type.

10. The method as defined in any one of claims 8 to 9, further including calculating a refresh rate ratio based on a target refresh rate of the source clock and a current refresh rate of the source clock.

11. The method as defined in claim 10, further including calculating a pixel clock value for the pixel clock value change request based on the refresh rate ratio and a current value of a pixel clock associated with the display.

12. The method as defined in any one of claims 8 to 11, further including reducing the value of the source clock from a default value of the source clock based on the application or application type corresponding to a productivity application.

13. The method as defined in any one of claims 8 to 12, further including reducing the value of the source clock from a default value of the source clock based on the application or application type corresponding to a media application.

14. Machine instructions arranged to cause at least one processor to perform a method as claimed in any of claims 8 to 13.

15. At least one non-transitory machine-readable medium comprising machine instructions as claimed in claim 14.

100

102
124
104

SOURCE DEVICE
106
108
116
DISPLAY DEVICE

DISPLAY CONTROLLER CIRCUITRY
126

OUTPUT PORT

INPUT PORT

118
122

PROCESSOR CIRCUIT(S) 110

PANEL CONTROLLER CIRCUITRY

PANEL

MEMORY 114

PIXEL CLOCK CIRCUITRY

120

OPERATING SYSTEM 112

FIG. 1

106

DISPLAY CONTROLLER CIRCUITRY

202
204

APPLICATION DETECTION CIRCUITRY

SOURCE CLOCK MODIFICATION CIRCUITRY

206
208

SOURCE CLOCK CIRCUITRY

CLOCK PACKET GENERATION CIRCUITRY

FIG. 2

118

PANEL CONTROLLER CIRCUITRY

302

PACKET ANALYSIS
CIRCUITRY

304

PIXEL CLOCK
MODIFICATION
CIRCUITRY

306

BUFFER

120

PIXEL CLOCK
CIRCUITRY

# FIG. 3

400

START

402
BOOT WITH DEFAULT CLOCK VALUE

404
OBTAIN APPLICATION TYPE

406
APPLICATION TYPE ASSOCIATED WITH POWER SAVING OPPORTUNITY?

NO

YES

408
MODIFY SOURCE CLOCK CIRCUITRY BASED ON APPLICATION TYPE

410
GENERATE PIXEL CLOCK CIRCUITRY CHANGE REQUEST PACKET

412
TRANSMIT PIXEL CLOCK CIRCUITRY CHANGE REQUEST PACKET AND PIXELS TO DISPLAY

414
APPLICATION TYPE CHANGE?

YES

NO

FIG. 4

500

START

502

PIXEL CLOCK CIRCUITRY ADJUSTMENT PACKET
RECEIVED?

NO

YES

504

MODIFY PIXEL CLOCK CIRCUITRY BASED ON RECEIVED
VALUE

506

CAUSE PIXEL TRANSMISSION TO PANEL AT RATE BASED
ON PIXEL CLOCK CIRCUITRY FREQUENCY

FIG. 5

FIG. 6

700

702

PROCESSOR CIRCUITRY

706

**CORE 1**

714

CONTROL
UNIT
CIRCUITRY

716        BUS
722

AL
CIRCUITRY

720

LEVEL 1 (L1)
CACHE

REGISTER 0
REGISTER 1
REGISTER 2

REGISTER N

718

INTERFACE
CIRCUITRY

716

702

BUS    CORE 2
714    722

CONTROL
UNIT
CIRCUITRY

ARITHMETIC
AND LOGIC
(AL)
CIRCUITRY

720

L1 CACHE

REGISTER 0
REGISTER 1
REGISTER 2

REGISTER N

718

BUS
704

702

**CORE 3**

714

CONTROL
UNIT
CIRCUITRY

716        BUS
722

AL
CIRCUITRY

720

L1 CACHE

REGISTER 0
REGISTER 1
REGISTER 2

REGISTER N

718

702

CORE 4

714

CONTROL
UNIT
CIRCUITRY

716        BUS
722

AL
CIRCUITRY

720

L1 CACHE

REGISTER 0
REGISTER 1
REGISTER 2

REGISTER N

718

702

**CORE N-1**

714

CONTROL
UNIT
CIRCUITRY

BUS
716        722

AL
CIRCUITRY

720

L1 CACHE

REGISTER 0
REGISTER 1
REGISTER 2

REGISTER N

718

LEVEL 2 (L2)
CACHE

710

702

CORE N

714

CONTROL
UNIT
CIRCUITRY

716        BUS
722

AL
CIRCUITRY

720

L1 CACHE

REGISTER 0
REGISTER 1
REGISTER 2

REGISTER N

718

**FIG. 7**

FIG. 8

SOFTWARE
DISTRIBUTION
PLATFORM

INSTR
632

— 905

NETWORK — 910

PROCESSOR
PLATFORM(S)

632

— 600

**FIG. 9**

Europäisches Patentamt

European Patent Office

Office européen des brevets

## EUROPEAN SEARCH REPORT

**Application Number**

EP 25 16 8698

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/200251 A1 (AUBINEAU VINCENT [FR] ET AL) 13 July 2017 (2017-07-13) * paragraph [0024] - paragraph [0042]; figures 1-6 * | 1-15 | INV. G09G5/00 G06F3/14 |
| X | US 2007/206018 A1 (BAJIC LJUBISA [CA] ET AL) 6 September 2007 (2007-09-06) * paragraph [0033] - paragraph [0059]; figures 1-7 * | 1-15 | |
| A | US 2024/161670 A1 (VON HIPPEL MICHAEL PAUL ERICH [US] ET AL) 16 May 2024 (2024-05-16) * paragraph [0021] - paragraph [0059]; figure 4 * | 1-15 | |
| A | US 2024/185775 A1 (ZHANG KAI [CN] ET AL) 6 June 2024 (2024-06-06) * figures 5-6 * | 1-15 | |

**TECHNICAL FIELDS SEARCHED (IPC)**

G09G

The present search report has been drawn up for all claims

| Place of search | Date of completion of the search | Examiner |
|---|---|---|
| Munich | 7 July 2025 | Mayerhofer, Alevtina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 8698

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2025

| Patent document cited in search report | Publication date | Patent family member(s) | Publication date |
|---|---|---|---|
| US 2017200251 A1 | 13-07-2017 | NONE | |
| US 2007206018 A1 | 06-09-2007 | NONE | |
| US 2024161670 A1 | 16-05-2024 | US 11574576 B1 | 07-02-2023 |
| | | US 2023360574 A1 | 09-11-2023 |
| | | US 2024161670 A1 | 16-05-2024 |
| | | WO 2023215014 A1 | 09-11-2023 |
| US 2024185775 A1 | 06-06-2024 | CN 114648951 A | 21-06-2022 |
| | | EP 4266302 A1 | 25-10-2023 |
| | | US 2024185775 A1 | 06-06-2024 |
| | | WO 2023160194 A1 | 31-08-2023 |

EPO FORM P0459

For more details about this annex : see Official Journal of the European Patent Office, No. 12/82